# EUROPÄISCHE PATENTSCHRIFT

(11) **EP 2 292 403 B1**
(45) Veröffentlichungstag und Bekanntmachung des Hinweises auf die Patenterteilung: **16.04.2014**
(21) Anmeldenummer: 10174578.4
(22) Anmeldetag: 31.08.2010
(51) Int. Cl.: B29C 49/48, B29C 49/06

(54) **Verfahren und Vorrichtung zur Demontage von Blasformen**
Method and device for disassembling blow moulds
Procédé et dispositif de démontage de moules de soufflage

(30) Priorität: 02.09.2009 DE 102009039695
(43) Veröffentlichungstag der Anmeldung: 09.03.2011
(60) Teilanmeldung: 13192285.8
(73) Patentinhaber: Krones AG, 93073 Neutraubling (DE)
(72) Erfinder: Meinzinger, Rupert, 94356 Kirchroth (DE); Senn, Konrad, 93059 Regensburg (DE); Albrecht, Thomas, 92339 Beilngries (DE)
(74) Vertreter: Bittner, Bernhard

(56) Entgegenhaltungen:
- EP-A2- 0 893 221
- WO-A2-2006/113428
- AT-U1- 9 438
- DE-C1- 3 613 543
- JP-A- 10 180 813

## Beschreibung

Die vorliegende Erfindung bezieht sich auf eine Umformeinrichtung zum Umformen von Kunststoffvorformlingen zu Kunststoffbehältnissen sowie ein Verfahren zur Montage / Demontage hierzu gehöriger Blasformen. Im Stand der Technik sind seit längerer Zeit Umformungseinrichtungen wie beispielsweise Blasumformungseinrichtungen bekannt, welche Kunststoffvorformlinge zu Kunststoffbehältnissen umformen. Zu diesem Zweck weisen derartige Vorrichtungen üblicherweise so genannte Blasformen auf, welche zusammengeklappt werden können und in ihrem Inneren einen Hohlraum ausbilden, der zur Expansion eines Kunststoffvorformlings gegen die Wandung des Hohlraumes dient, um so Kunststoffbehältnisse zu erzeugen.

Diese Blasformen weisen daher üblicherweise zwei Blasformhälften auf, die in entsprechenden Blasformenträgern angeordnet werden, siehe z.B DE 3613543 und WO2006113428.

Falls eine entsprechende Vorrichtung auf andere Flaschentypen umgerüstet werden soll ist hierzu erforderlich, dass die Blasformen von dem Blasformträger entnommen und durch andere Blasformen ersetzt werden. Dieser Vorgang ist dabei relativ zeitintensiv, da insbesondere für eine Vielzahl von Blasstationen jede einzelne Blasform von ihrem Träger entnommen werden muss.

Aus diesem Grunde sind aus dem Stand der Technik diverse Koppelmechanismen bekannt, welche ein möglichst schnelles Trennen der Blasformen von ihren Formträgern erlauben. Derartige Schnelllösemechanismen ermöglichen dabei zum Teil eine sehr zügige Auswechslung der jeweiligen Blasformen. Gleichwohl wird nach noch schnelleren Möglichkeiten für derartige Blasformwechsel gesucht.

Der folgenden Erfindung liegt daher die Aufgabe zu Grunde, die Montage / Demontage von derartigen Blasformen schneller zu gestalten. Eine weitere Aufgabe ist darin zu sehen, derartige Blasformwechsel gegebenenfalls auch automatisiert durchzuführen.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Während im Stand der Technik bisher üblicherweise zunächst die Blasformträger mit den Blasformhälften geöffnet werden und anschließend separat die beiden Blasformseitenteile von dem Blasformträger getrennt werden, wird erfindungsgemäß vorgeschlagen, die Blasform in ihrer Gesamtheit aus dem Blasformträger zu entnehmen. Hierunter ist zu verstehen, dass die einzelnen Blasformteile zum Zeitpunkt der Entnahme aus dem Blasformträger fest miteinander verbunden sind, sodass ein einfaches Handhabungsinstrument ausreicht, um die Entnahme durchzuführen.

Durch die erfindungsgemäße Vorgehensweise ist es auch möglich, einen auch im Arbeitsbetrieb der Vorrichtung nötigen Öffnungsvorgang der Blasformträger zu nutzen um die Blasform aus den Trägern zu entnehmen.

Dabei handelt es sich um zwei Seitenteile dieser Blasform, die gemeinsam einen Hohlraum zur Umformung der Kunststoffvorformlinge zu Kunststoffbehältnissen umgeben und welche im Wesentlichen zusammengesetzt sind. Unter im wesentlich zusammengesetzt wird wiederum verstanden, dass die beiden Seitenteile nicht unbedingt vollständig aneinander liegen müssen, wie dies beispielsweise bei diesem Arbeitsbetrieb der Fall ist, sondern dass beispielsweise auch ein Zwischenraum zwischen den Seitenteilen vorgesehen sein kann, wobei jedoch dennoch ein zumindest indirekt vermittelter Halt zwischen den beiden Teilen der Blasform besteht.

Bei einem weiteren vorteilhaften Verfahren weist die Blasform zwei Blasformhälften auf und diese Blasformhälften sind mit einem Haltemittel aneinander befestigt, während die Blasform von dem Blasformträger getrennt wird. Dabei kann es sich um ein Haltemittel handeln, welches an beiden Blasformhälften angeordnet ist und diese miteinander verbindet. Es könnte sich jedoch auch um ein Haltemittel handeln, welches beispielsweise in einem Boden der Vorrichtung angeordnet ist auf dem die beiden Blasformhälften aufsitzen. Durch diese Vorgehensweise können die Blasformträger geöffnet und anschließend die Blasform aus der Umformeinrichtung entnommen werden.

Bei einer weiteren vorteilhaften Ausführungsform weist die Blasform ein Bodenteil auf und dieses Bodenteil ist bevorzugt an wenigstens einer Blasformhälfte befestigt, während die Blasform von dem Blasformträger getrennt wird. Vorteilhaft weisen die beiden Blasformhälften Ausnehmungen auf, welche das Bodenteil aufnehmen und beispielsweise zwischen sich einspannen. So ist es möglich, dass das Bodenteil an beiden Blasformhälften angeordnet und insbesondere in beide Blasformhälften eingehängt ist.

Bei einem weiteren bevorzugten Verfahren werden die Blasformhälften derart an dem Bodenteil arretiert, dass sich der Formträger beim Öffnen desselben von den Blasformhälften löst. So kann vorgesehen sein, dass in einem speziellen Montage- oder Demontage - Betrieb der Umformeinrichtung zunächst eine Verriegelung zwischen dem Formträger und der Blasform geöffnet wird und anschließend die Formträger geöffnet werden und schließlich die Blasform entnommen wird.

Bei einem weiteren bevorzugten Verfahren wird die Blasform nach der Trennung von dem Blasformträger mittels einer Transporteinrichtung transportiert. Auf diese Weise kann zu einer Automatisierung des Blasformwechsels beigetragen werden, indem nicht nur die Blasform im zusammengesetzten Zustand von den Formträgern entfernt wird, sondern anschließend auch mit einer Transporteinrichtung abtransportiert wird.

Vorteilhaft wird die Blasform in einem Greif- oder Halteelement transportiert, welches auch zum Transport der Behältnisse dient. So ist es möglich, dass die gleichen Halteelemente und Transportwege auch zur Demontage der Blasformen eingesetzt werden können, die auch im Arbeitsbetrieb zum Transport der Behältnisse dienen. Auf diese Weise kann eine weitere Automatisierung und auch Vereinfachung des Systems erreicht werden.

Das Verfahren ist auch anwendbar, wenn der Aufbau einer Blasstation einen äußeren Formträger, eine mittlere Mutterform sowie eine innere Blasform aufweist. Der erfindungsgemäße Vorgang umfasst dabei sowohl das Entfernen der Blasformteile aus dem Blasformträger und der damit verbundenen Mutterform, als auch das Entfernen der Mutterform und der Blasformteile aus dem Blasformträger.

Die vorliegende Erfindung ist daher weiterhin auf ein Verfahren zur Montage und/oder Demontage von Blasformen aus oder in Vorrichtungen zum Umformen von Kunststoffvorformlingen zu Kunststoffbehältnissen gerichtet, wobei die Blasform in einem wenigstens teilweise zusammengesetzten Zustand mittels einer Transporteinrichtung entlang eines durch die Transporteinrichtung vorbestimmten Transportpfades transportiert wird.

Vorzugsweise handelt es sich bei der Transporteinrichtung um eine solche Transporteinrichtung, welche auch zum Transportieren der Kunststoffvorformlinge und/oder der Kunststoffbehältnisse verwendet wird. Vorteilhaft wird die Blasform wenigstens teilweise auf einem kreisförmigen Transportpfad transportiert. So ist es möglich, dass die Blasform über einen Einlaufstern zur Montage an Blasformträger herangeführt wird und/oder über einen Auslaufstern von einem Blasformträger weggeführt wird.

Die vorliegende Erfindung ist weiterhin auf eine Umformeinrichtung zum Umformen von Kunststoffvorformligen zu Kunststoffbehältnissen mit einer mehrteilig ausgebildeten Blasform gerichtet, wobei diese Blasform einen Hohlraum ausbildet, innerhalb dessen die Kunststoffvorformlinge zu den Kunststoffbehältnissen expandierbar sind. Weiterhin weist die Umformeinrichtung einen Blasformträger auf, an dem die Blasform lösbar angeordnet ist.

Erfindungsgemäß ist ein Haltemittel vorgesehen, welches wenigstens zwei Teile der Blasform in einem von dem Blasformträger gelösten Zustand aneinander befestigt.

Auch vorrichtungsseitig wird daher vorgeschlagen, dass insbesondere die Blasform derart ausgeführt ist, dass die Blasform aus der Anlage nach einer Trennung von dem Blasformträger in einem zumindest teilweise zusammengesetzten Zustand entnommen werden kann. Auch wird vorgeschlagen, dass die Blasform in diesem Zustand transportierbar ist. Vorteilhaft setzt sich die Blasform aus wenigstens zwei Seitenteilen und einem Bodenteil zusammen. Das Haltemittel dient bevorzugt in diesem Zustand dazu, dass Blasform in ihrer Gesamtheit, dass heißt die Seitenteile und das Bodenteil entnommen und transportiert werden können.

Bei diesem Haltemittel kann es sich beispielsweise um ein Greifmittel handeln, welches die beiden Blasformteile aufeinander zu spannt. Auch könnten magnetische Mittel in den Blasformhälften vorgesehen sein, welche durch Magnetkraft die beiden Blasformhälften aneinander halten. Insbesondere weist der Blasformträger wenigstens zwei gegeneinander schwenkbare Trägerhälften auf, wobei bevorzugt jede Trägerhälfte ein Seitenteil der Blasform enthält.

Die Blasformhälften sind vorteilhaft symmetrisch zueinander ausgebildet. Auch ist es möglich, dass die Blasformhälften zur gemeinsamen Aufnahme einer weiteren Mutterform dienen, innerhalb derer die Kunststoffvorformlinge zu den Kunststoffbehältnissen expandiert werden.

In einem normalen Arbeitsbetrieb werden die beiden Blasformhälften lediglich zur Expansion der Behältnisse zusammengeklappt, sind aber ansonsten vollkommen voneinander getrennt. Auch das erfindungsgemäße Haltemittel erlaubt damit eine Entnahme der Blasform in ihrer Gesamtheit aus dem Blasformträger.

Bei einer weiteren vorteilhaften Ausführungsform steht der Blasformträger über einen - vorteilhaft automatisch - lösbaren Verbindungsmechanismus mit der Blasform in Verbindung. Damit wird zunächst dieser Verbindungsmechanismus im Falle einer Demontage gelöst um anschließend die Blasform zu entnehmen. Im Falle der Montage wird zunächst die Blasform zwischen die Blasformträger eingesetzt und anschließend wird der lösbare Verbindungsmechanismus verriegelt um die beiden Blasformhälften in dem Formträger anzuordnen.

Bei einer weiteren vorteilhaften Ausführungsform sind die zwei Teile der Blasform unmittelbar aneinander mit dem Haltemittel befestigt.

Bei einer weiteren vorteilhaften Ausführungsform ist die Blasform an einem Halteelement befestigbar, welches in einem Arbeitsbetrieb zum Transportieren der Behältnisse dient. So ist es beispielsweise möglich, dass die Blasform über magnetische Kräfte an dem Halteelement angeordnet ist.

Bei einer weiteren vorteilhaften Ausführungsform ist jedoch ein Haltestück vorgesehen, welches sowohl mit der Blasform als auch mit einem Halteelement, welches in einem Arbeitsbetrieb zum Transportieren der Behältnisse dient, in Verbindung bringbar ist. So könnte ein Haltestück vorgesehen sein, welches in einen Mündungsbereich der Blasform eingeführt wird und diesem gegenüber nicht entnommen werden kann solange die beiden Blasformhälften miteinander verbunden sind. Das andere Ende dieses Haltestücks könnte so ausgeführt sein, dass es von einem Halteelement der Anlage gehalten werden kann. Auf diese Weise können die bereits vorhandenen Transporteinrichtungen genutzt werden, um auch die Blasform selbst abzutransportieren. Vorteilhaft ist das Haltestück einteilig ausgebildet.

Bei einer weiteren vorteilhaften Ausführungsform ist das Haltestück mit zwei Teilen der Blasform zum Halten der Blasform in Eingriff bringbar. So ist es möglich, dass dieses Haltestück wie erwähnt, zwischen den beiden Blasformhälften aufgenommen wird und in diesem Falle nicht mehr herausgezogen werden kann.

Die vorliegende Erfindung ist weiterhin auf eine Blasform zum Umformen von Kunststoffvorformlingen zu Kunststoffbehältnissen mit einem ersten Seitenteil und einem zweiten Seitenteil gerichtet, wobei das erste Seitenteil und das zweite Seitenteil in einem zusammengesetzten Zustand einen Hohlraum umgeben innerhalb dessen die Kunststoffvorformlingen zu Kunststoffbehältnissen expandierbar sind.

Erfindungsgemäß weist die Blasform eine Verbindungseinrichtung auf, welche das erste Seitenteil an einem zweiten Seitenteil befestigt, wobei ein Element zur Verbindung mit dem ersten Seitenteil in Verbindung steht und ein weiteres Element in Verbindung mit dem zweiten Seitenteil steht, sodass die Blasform in einem geschlossenen Zustand transportabel ist.

Insbesondere ist die Blasform in einem von den Formträgern gelösten Zustand transportabel. Weiterhin ist insbesondere die Blasform auch unabhängig von den Formträgern und insbesondere in einem von den Formträgern getrennten Zustand transportabel. Weiterhin ist die Blasform auch auf beliebigen und insbesondere von der Maschine bzw. Umformeinrichtung unabhängigen Pfaden transportierbar.

Auch durch eine derart ausgebildete Blasform kann die obige Aufgabe gelöst werden, da die Blasform in ihrer Gesamtheit aus dem Blasformträger entnommen werden kann. Insbesondere ist die Blasform so ausgebildet, dass sie von einem Blasformträger aufnehmbar und an diesem arretierbar ist. Vorteilhaft ist die Blasform symmetrisch ausgebildet. Weiterhin weist die Blasform Anschlüsse zur Weiterleitung eines flüssigen Mediums wie insbesondere eines Temperiermediums auf. Diese Anschlüsse sind vorteilhaft ebenso mit entsprechenden Anschlüssen des Blasformträgers koppelbar.

Die vorliegende Erfindung ist weiterhin auf ein Haltestück gerichtet, welches einen ersten Halteabschnitt aufweist, der mit einer geschlossenen Blasform in Verbindung bringbar ist sowie einem zweiten Halteabschnitt, der von einem Halteelement und insbesondere einem Greifelement, welches zum Halten von Behältnissen dient, greifbar ist.

Vorzugsweise weist dieses Haltestück ein Eingriffsmittel auf, welches in einen inneren Hohlraum in der Blasform eindringt und welches wenigstens abschnittsweise einen größeren Querschnitt aufweist als ein Halsabschnitt dieser Blasform. Auf diese Weise kann das Haltestück nicht von der Blasform getrennt werden. Es wäre jedoch auch möglich, dass das Haltestück ein Eingriffsmittel aufweist, welches an einem Außenumfang zweier Seitenteile der Blasform angreift um diese beiden Seitenteile zusammen zu halten.

Weitere Vorteile und Ausführungsformen ergeben sich aus den beigefügten Figuren:
Dabei zeigen:
   - Fig. 1: eine schematische Darstellung eines Blasformträgers mit einer Blasform;
   - Fig. 2: eine schematische Draufsicht auf einen Blasformträger mit einer Blasform;
   - Fig. 3a - 3d: vier Darstellungen zur Veranschaulichung eines Haltestücks für eine Blasform;
   - Fig. 4a - 4c: drei Darstellungen zur Veranschaulichung eines weiteren Haltestücks für eine Blasform; und
   - Fig. 5: eine grobschematische Darstellung einer erfindungsgemäßen Anlage zum Behandeln von Behältnissen.

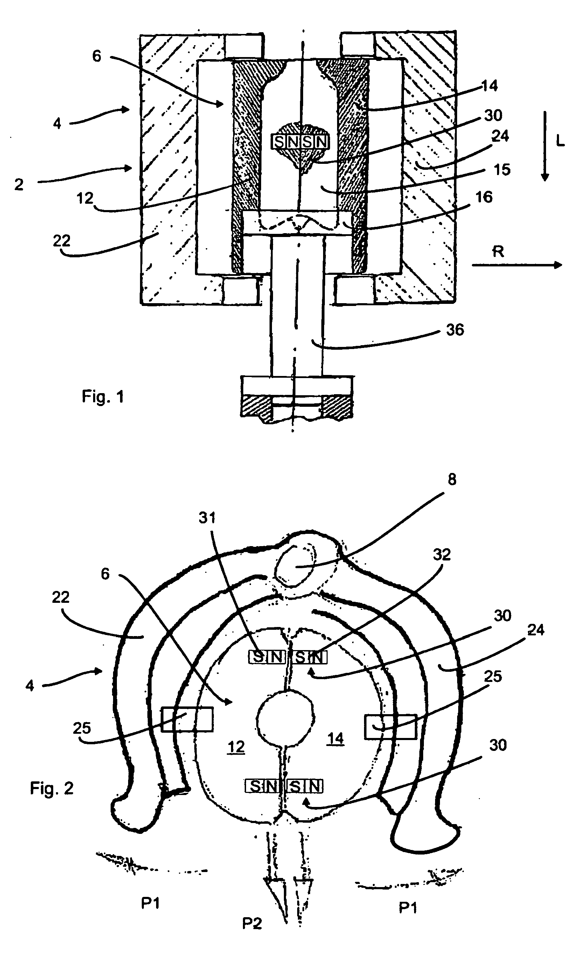

Fig. 1 zeigt eine grob schematische Darstellung einer Blasstation 2. Diese Blasstation 2 weist hier einen in seiner Gesamtheit mit 4 bezeichneten Blasformträger auf. Dieser Blasformträger weist zwei Trägerhälften 22 und 24 auf, welche im Arbeitsbetrieb die Blasform aufnehmen. Genauer setzt sich die Blasform 6 ebenfalls aus zwei Blasformteilen bzw. Blasformhälften 12 und 14 zusammen, wobei die erste Blasformhälfte 12 an einer ersten Trägerhälfte 22 befestigt ist und eine zweite Blasformhälfte 14 an einer zweiten Trägerhälfte 24. Ein entsprechender Befestigungsmechanismus ist in Fig. 1 jedoch nicht dargestellt.

Weiterhin weist die Blasform 6 noch ein Bodenteil 16 auf, welches gemeinsam mit den beiden Blasformteilen 12 und 14 einen Hohlraum 15 ausbildet, innerhalb dem (nicht gezeigte) Kunststoffvorformlinge zu den Behältnissen expandiert werden. Das Bezugszeichen 36 bezieht sich auf ein Zustellelement, welches das Bodenteil 16 in einem Arbeitsbetrieb an die beiden Seitenteile 12 und 14 der Blasform heranführt.

Das Bezugszeichen 30 zeigt grob schematisch eine Befestigungseinrichtung, welche die beiden Blasformhälften zur Entnahme der Blasform in einem geschlossenen Zustand aneinander befestigt. Dabei kann es sich beispielsweise um entgegengesetzt polarisierte Magneten handeln, welche die beiden Blasformhälften aneinander halten. Um zu verhindern, dass die Blasformhälften auch im Arbeitsbetrieb aneinander gehalten werden sind unterschiedliche Möglichkeiten denkbar. So könnte beispielsweise einer der beiden Magneten gegenüber dem anderen in einer Längsrichtung L der Blasform verschiebbar sein, so dass im Arbeitsbetrieb keine Magnetkraft zwischen den beiden Blasformteilen 12 und 14 entsteht. Weiterhin wäre es auch möglich, dass einer oder beide Magneten in radialer Richtung R der Blasform jeweils nach innen verschoben wird so dass ebenfalls eine Magnetkraft im Arbeitsbetrieb zwischen den beiden Blasformteilen 12 und 14 minimiert oder auf null reduziert wird.

Weiterhin wäre es auch möglich, dass in einer der beiden Blasformhälften eine Vielzahl von jeweils abwechselnd polarisierten Magneten in der Längsrichtung L angeordnet ist und weiterhin ein Schiebeelement vorgesehen ist, welches entsprechend der Teilung dieser Magneten magnetisierbare Flächen aufweist wobei dieses Element in der Richtung L verschiebbar gegenüber den Magneten ist. Je nach Stellung dieses Verschiebeelements decken die Flächen entweder die Magnete ab so dass die Magnetkraft vermittelt wird oder stehen zwischen diesen Magneten so dass die Magnete kurzgeschlossen werden und auf diese Weise die Magnetkraft erheblich reduziert wird.

Die Befestigungseinrichtung setzt sich also hier aus mindestens zwei Magneten 31, 32 zusammen, wobei der Magnet 31 an der ersten Blasformhälfte 12 und der andere Magnet an der zweiten Blasformhälfte 14 angeordnet ist. So könnten die beiden Blasformhälften Ausnehmungen aufweisen, in denen die beiden Magneten 31, 32 angeordnet sind. Auch könnte nur ein Magnet vorgesehen sein, der einen magnetischen Abschnitt der jeweils anderen Blasformhälfte anzieht. Die Magneten könnten auch in einer Längsrichtung L der Blasform verschiebbar sein, um den magnetischen Halt zu lösen bzw. zu bilden.

Daneben wären jedoch auch andere (insbesondere mechanische) Halteelemente denkbar, welche die beiden Blasformteile 12, 14 aneinander halten wie beispielsweise mechanische Halteriegel oder dergleichen mit denen nach Wunsch die beiden Blasformhälften miteinander gekoppelt werden können. Derartige Verriegelungselemente könnten auch automatisch, beispielsweise über eine Führungskurve, angesteuert werden.

Wie erwähnt, wird in einem Demontagebetrieb zunächst der Blasformträger 4 von der Blasform 6 gelöst und anschließend kann die Blasform in ihrer Gesamtheit aus der Maschine entnommen werden. Es wäre jedoch auch eine Entnahme in Längsrichtung d.h. senkrecht zu der Figurenebene möglich.

Fig. 2 zeigt eine weitere Darstellung einer erfindungsgemäßen Blasstation. Auch hier ist ein Zustand dargestellt, in dem die Blasformträger 22 und 24 teilweise geöffnet sind und die Blasform selbst in einem verschlossenen Zustand angeordnet ist. In diesem Zustand kann die Blasform im geschlossenen Zustand entlang des Pfeils P2 aus dem Blasformträger, dessen beiden Seitenteile 22 und 24 entlang der Pfeile P1 nach außen geschwenkt sind, entnommen werden.

Weiterhin wäre es auch möglich, einen Verriegelungsmechanismus, der die beiden Blasformhälften 12 und 14 an den jeweiligen Trägerhälften 22 und 24 befestigt, zu koppeln mit einem Verriegelungsmechanismus der beiden Blasformhälften 12 und 14. So könnte diese Koppelung derart gestaltet sein, dass bei einem Entriegeln der Blasformhälften 12 und 14 gegenüber den Trägerhälften 22 und 24 gleichzeitig ein Verriegeln der beiden Blasformhälften 12 und 14 auftritt.

Damit kann zum Entnehmen der Blasform bzw. Formwechselteile die Vorrichtung und die Handhabung derart konzipiert sein, dass Umrüstzeit eingespart wird. Diese Zeiteinsparung ergibt sich hauptsächlich aus dem gemeinsamen Herausnehmen bzw. Einsetzen der Blasform d. h. der beiden Formhälften 12 und 14 und der Bodenform 16 so dass nur noch ein Vorgang statt wie im Stand der Technik drei unterschiedliche Vorgänge notwendig sind.

Daneben ist es auch möglich, dass die Blasform gemeinsam gelagert wird und nicht wie bisher die einzelnen Bestandteile der Blasform gelagert werden. Durch diese gemeinsame Lagerung wird zum einen weniger Lagerplatz benötigt aber zum anderen können auch die zusammengehörigen Formteile 12, 14 und 16 schnell aufgefunden werden.

Damit werden zur Demontage zunächst die beiden Formhälften 12, 14 beim geschlossenen Formträger von diesem Formträger 4 entriegelt. Dies ist, wie erwähnt, eine Änderung zu der heutigen Vorgehensweise. Erst wenn die beiden Formhälften von dem Formträger entriegelt sind werden die beiden Formträger 22 und 24 geöffnet wobei dieses Öffnen sowohl manuell als auch automatisch erfolgen kann.

Durch die erwähnte Befestigungseinrichtung 30 bleiben die beiden Blasformhälften 12 und 14 zusammen wobei, wie erwähnt, neben der magnetischen Verbindung auch beispielsweise eine Schnappverbindung in Frage kommen kann. Die Formträger 22 und 24 haben sich dann soweit von den Formhälften 12 und 14 entfernt dass die Formhälften gemeinsam auf der Bodenform 16 (vgl. Fig. 1) frei stehen. Vorteilhaft sind dabei die Formhälften 12 und 14 auf die Bodenform 16 zueinander am Umfang und auch axial fixiert um ein positionsgenaues Wiedereinsetzen zu gewährleisten. Die so zusammenhängenden Formwechselteile 12, 14 und 16 stehen frei zum Entnehmen und können manuell oder vollautomatisch entnommen und gelagert werden.

Aus einem entsprechenden Magazin, dass so konzipiert, ist das alle Teile gemeinsam gelagert werden können die einzusetzenden Formsätze gemeinsam entnommen werden und somit Zeit zum Zusammensuchen eingespart werden.

Auch in umgekehrter Reihenfolge zum Montieren der Blasformen 6 können die zusammenhängenden Formwechselteile 12, 14 und 16 eingesetzt werden. Anschließend wird die Bodenform mit den darauf fixierten Formhälften 12 und 14 positioniert und in einem nächsten Schritt können die beiden Formträger 22 und 24 schließen. Erst in einem letzten Schritt werden wiederum die Blasformhälften 12 und 14 mit den jeweiligen Trägerhälften 22 und 24 verriegelt, um die Änderung in einen arbeitsbereiten Zustand zu versetzen.

Vorzugsweise wäre es auch möglich, die Verbindung der beiden Formhälften 12 und 14 über das Bodenteil 16 herzustellen. So können die beiden Formhälften 12 und 14 (ggfs.) auf dem Bodenteil 16 oder auch direkt miteinander so arretiert werden dass sich der Formträger 4 beim Öffnen von der Blasform bzw. deren Bestandteilen 12 und 14 gelöst.

Das Bezugszeichen 25 veranschaulicht grob schematisch einen Verbindungsmechanismus, über den die Trägerteile 22, 24 mit der Blasform 6, bzw. deren Blasformhälften in Verbindung stehen. Vorzugsweise handelt es sich dabei um einen automatisch lösbaren Verbindungsmechanismus, der beispielsweise über eine Führungskurve gelöst oder geschlossen werden kann. Dieser Verbindungsmechanismus weist bevorzugt mehrere Halteelemente auf, mit denen die Blasformteilen an den Trägerteilen 22, 24 gehalten werden. Auch könnte dieser Verbindungsmechanismus magnetische Haltelemente aufweisen. Daneben könnte die Verbindung zwischen der Blasform und den Trägerteilen auch durch einen Unterdruck erzeugt werden.

Vorteilhaft können gemeinsam mit dem Verbindungsmechanismus auch Kühlmittelanschlüsse an die Blasform 6 angelegt werden, um diese mit einem insbesondere flüssigen Temperiermittel bzw. allgemein mit einem Temperiermittel zu versorgen. Diese Anschlüsse könnten dabei ebenfalls automatisch lösbar bzw. verbindbar sein.

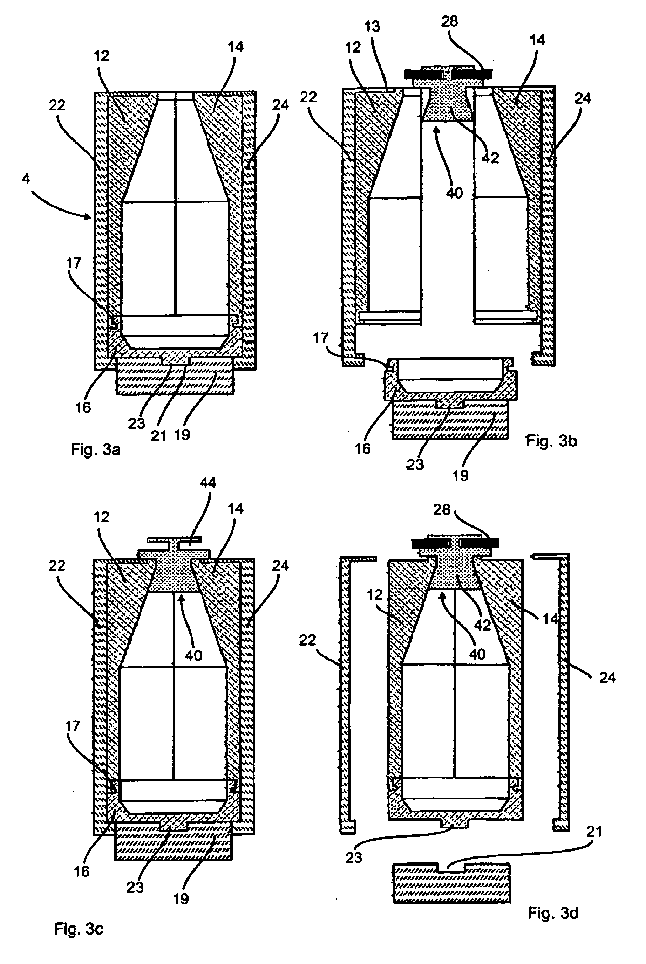

Die Fig. 3a - 3d zeigen unterschiedliche Stationen zum Entnehmen einer Blasform. Bei der in Fig. 3a gezeigten Situation ist in einem Produktionsmodus ein geschlossener Formträger 4 mit einer darin eingesetzten Blasform 6 gezeigt. Genauer gesagt sind hier die beiden Blasformteile 12 und 14 an den entsprechenden Trägerteilen 22 und 24 fest angeordnet so dass bei einem Auseinanderklappen der beiden Trägerhälften 22 und 24 auch die Blasformteile 12 und 14 mitbewegt werden. Das Bezugszeichen 17 kennzeichnet einen Eingriffsbereich, mit dem bei einem Zusammenklappen der beiden Blasformteile 12 und 14 auch ein Bodenteil 16 eingehakt wird. Das Bodenteil 16 kann über einen Zustellmechanismus 19 an die beiden Formteile 12 und 14 herangeführt werden wobei dieser Zustellmechanismus 19 eine Ausnehmung 21 aufweist, in welche wiederum ein entsprechend angepasster Vorsprung 23 des Bodenteils 16 eingreift.

Fig. 3b zeigt einen geöffneten Zustand der beiden Blasformträger 22 und 24 mit den darin arretierten Blasformteilen 12 und 14. Das Bezugszeichen 13 bezieht sich auf einen Eingriffsbereich, mittels dem die Blasformteile 12 und 14 jeweils an den Blasformträgern 12 und 14 arretiert sind. In diesem geöffneten Zustand des Formträgers 4 kann ein Halteelement 40 in das Innere der Blasform 6 eingebracht werden wobei dieses Halteelement insbesondere zum Transport der Blasform 6 dient. Dieses Halteelement weist einen Eingriffsabschnitt 42 auf, dessen Querschnitt größer ist als ein Öffnungsquerschnitt der Blasform 6 im geschlossenen Zustand.

Fig. 3c zeigt einen geschlossenen Zustand mit eingesetztem Halteelement 40. Man erkennt, dass das Halteelement 40 aufgrund seiner Ausgestaltung bzw. des Eingriffsbereichs 42 nicht aus der Blasform 6 entnommen werden kann. Vielmehr kann mit Hilfe dieses Halteelements die Blasform 6 transportiert werden. Bei der in Fig. 3d gezeigten Situation wurde der Träger wie in Fig. 2 veranschaulicht, geöffnet so dass nunmehr die Blasform 6 gemeinsam mit den Formteilen 12 und 14 sowie dem Bodenteil 16 mit Hilfe des Halteelements 40 entnommen werden kann. Zu diesem Zweck weist das Halteelement Ausnehmungen 44 (vgl. Fig. 3c) auf, in welche eine Greifeinrichtung bzw. Greifklammer 28 eingreifen kann, welche im Normalbetrieb der Anlage auch zum Transportieren der Behältnisse dient. Diese Greifeinrichtung kann die Blasform (ggfs. auch über die im Normalbetrieb üblichen Transportwege) abtransportieren beispielsweise zu einem Magazin. Weiterhin kann auf diese Weise die Blasform auch zu einer Reinigungsstation transportiert werden, in der ein ggfs. automatisches Reinigen der Blasform möglich ist.

Dabei können die einzelnen Bewegungen, die zum Einführen des Halteelements 40 bzw. auch zum Transportieren der Blasform dienen, aus einer Bewegung aus einem normalen Arbeitsbetrieb der Anlage abgeleitet werden.

Bei einer nicht in den Figuren dargestellten Vorgehensweise wird das Haltestück bzw. der Dummy mit den Formhälften 12 und 14 und der Bodenform 16 vororientiert auf einen Einlaufstern gesteckt. Weiterhin kann die Blasform 6 bei einer Eingabe orientiert und dabei im vorgegebenen Winkel beispielsweise 20 Grad gedreht in die Formträger 4 eingebracht werden. Bei dieser Ausführungsform ist das Haltestück wenigstens zeitweise drehfest mit der Blasform verbunden.

In einem weiteren Schritt wird vorteilhaft das Haltestück, beispielsweise über eine Zahnstange, gedreht bis die Blasformteile 12 und 14 und das Bodenteil 16 in den Blasformträger einrasten. In einem weiteren Schritt können die Wasseranschlüsse für die Blasformteile und das Bodenteil 16 vorzugsweise kurvengesteuert verriegelt werden. Schließlich kann die Blasform 6 geöffnet werden und das Haltestück 40 beispielsweise über einen Auslaufstern entnommen werden.

Damit übernimmt hier das Halteelement die Aufgabe, die beiden Formhälften 12 und 14 sowie den Boden aufzunehmen so dass die gesamte Blasform 6 oder zumindest beide Blasformhälften 12 und 14 auf einmal aus dem geöffneten Formträger 4 entnommen werden können. Bei einer möglichen Ausführungsform des Halteelements 40 wird dieses über einen Transferarm wobei es sich hier sogar um den Einlaufstern der Maschine handeln kann in die sich schließende Form eingegeben. Beim Schließen der beiden Blasformhälften rasten diese wie in Fig. 3b gezeigt in das Halteelement 40 ein. Beim weiteren Drehen der Blasmaschine werden die Blasformen 6 von dem Blasformträger 4 gelöst. Dies kann, wie oben erwähnt, beispielsweise durch eine kurvengesteuerte Verriegelung geschehen. Daneben können auch evtl. vorhandene Wasseranschlüsse über Kurven entkoppelt werden.

Bei dem nachfolgenden Öffnen der Formträger 4 bleiben die an dem Halteelement 40 arretierten Blasformhälften 12 und 14 geschlossen und das Halteelement kann gemeinsam mit der Blasform 6 beispielsweise mit einem Transferarm entnommen werden, wobei es sich bei diesem Transferarm auch um den Auslaufstern einer Anlage handeln kann. Anschließend kann die gesamte Blasform 6 mitsamt dem Halteelement 40 an diesem Halteelement in ein Magazin eingehängt werden.

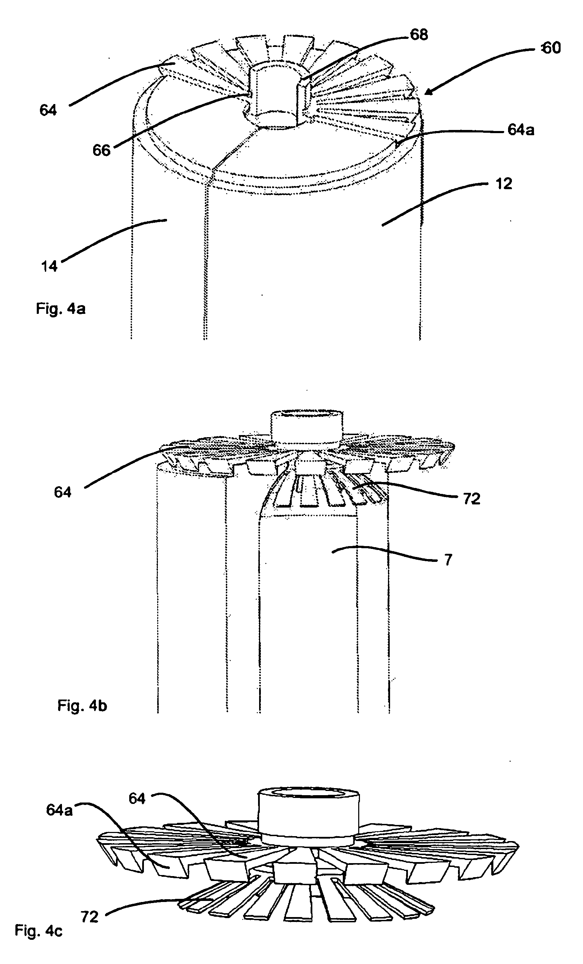

Die Figuren 4a - 4c zeigen einer weitere Ausführungsform eines Haltestücks 60, welches die Blasform von außen greift. So könnte beispielsweise das Haltestück 60 in Form eines Kunststoffclips mit einem Einlaufstern in eine offene Form gefahren werden. Dieses Haltestück weist eine Vielzahl von sich in radialer Richtung der Blasform erstreckenden Haltestegen 64 bzw. Clipse auf. Diese Haltestege sind jeweils an einem Grundkörper 68 angeordnet. Dieser Grundkörper weist dabei einerseits eine umlaufende Nut 66 auf, in welche eine Greifklammer eingreifen kann. Daneben kann der Grundkörper jedoch auch noch eine Öffnung aufweisen, damit auch andere Greifelemente, wie beispielsweise Haltedorne in es eingreifen können. Das Bezugszeichen 64a bezieht sich auf Haltehaken, die in einen Außenumfang der Blasformteile 12, 14 eingreifen, wobei zu diesem Zweck die Blasform beispielsweise eine Umfangsnut aufweisen kann.

Wie in Fig. 4b erkennbar, weist das Haltestück auch untere Stützstege 72 aus, die bei geschlossener Blasform im Inneren derselben angeordnet sind und sich gegen die Innenwandung 7 der Blasform 6 abstützen. Wenn sich die Form schließt können Clipse bzw. deren Haken 64a über die Form greifen wobei ein Abstreifen der Sicherung durch die inneren Arme bzw. Stützstege verhindert wird die sich beispielsweise an die Flaschenkontur anlegen und so das Halteelement 60 nach unten ziehen. Die Demontage ist durch Abziehen nach oben oder Anheben der besagten Clipse möglich.

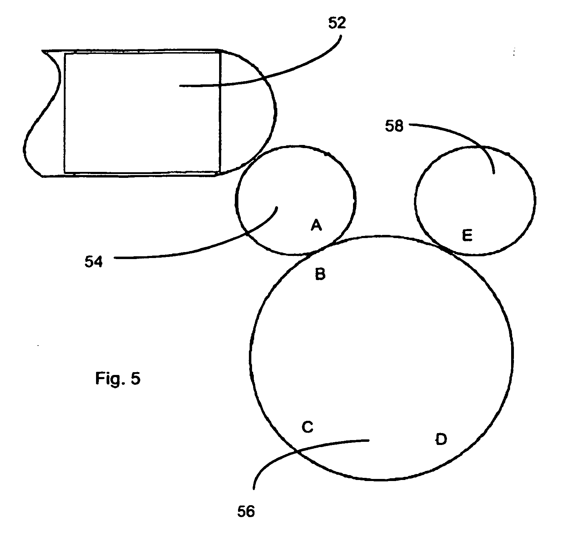

Fig. 5 veranschaulicht das erfindungsgemäße Verfahren. Dabei kennzeichnet das Bezugszeichen 52 eine Heizeinrichtung zum Erwärmen der Vorformlinge, das Bezugszeichen 54 einen Einlaufstern, das Bezugszeichen 56 ein Blasrad, an dem eine Vielzahl von Blasstationen der in Fig. 1 gezeigten Art angeordnet sein können und das Bezugszeichen 58 einen Auslaufstern. In dem Bereich A kann das Halteelement, wie oben erläutert, aufgesteckt werden und in einer Position B, bereits auf dem Blasrad dieses Halteelements in die Blasform 6 einrasten. In dem Bereich C können die Wasseranschlüsse entkoppelt werden und dem Bereich D die Blasform 6 von dem Blasformträger 4 entriegelt werden. In einem Bereich E wäre es möglich, das Halteelement 40 mitsamt der Blasform zu entnehmen.

Beim Einbringen einer neuen Form kann das erläuterte Prinzip umgekehrt werden. So kann in einem Bereich A ein Halteelement mit einer vororientierten Form aufgesteckt werden. In einem Bereich B kann eine Orientierung der Form stattfinden. In einem Bereich C kann die Form auf einen Träger fixiert werden, in einem Bereich D die Wasseranschlüsse angekoppelt werden und einem Bereich E bei geöffnetem Träger das Halteelement 40 entnommen werden. Auch hier ist es wiederum möglich, die Blasform 4 über einen Transferarm einzubringen. Das genaue Orientieren der Blasform kann erfolgen, während die Formträgerhälften schließen. Beispielsweise ist eine derartige Orientierung über Nasen am Formträger 4 möglich. Bei geschlossener Form werden sowohl die Wasseranschlüsse angekoppelt als auch die Form in Formträger 4 fixiert wobei dies wie erwähnt auch wieder über zugestellte Kurven ablaufen kann. Beim Öffnen der Blasformhälften 12 und 14 wird das Halteelement 40 ausgerastet und über einen Auslaufstern 58 entnommen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 2: Blasstation
- 4: Blasformträger
- 6: Blasform
- 7: Innenraum der Blasform 6
- 12, 14: Blasformhälfte
- 15: Hohlraum
- 16: Bodenteil
- 13, 17: Eingriffsbereich
- 19: Zustellmechanismus
- 21: Ausnehmung
- 22, 24: Trägerhälte, Blasformträger
- 23: Vorsprung
- 25: Verbindungsmechanismus
- 28: Greifklammer
- 30: Befestigungseinrichtung
- 31,32: Magnete
- 36: Zustellelement
- 40: Haltestück
- 42: Eingriffsabschnitt
- 44: Ausnehmungen
- 52: Heizeinrichtung
- 54: Einlaufstern
- 56: Blasrad
- 58: Auslaufstern
- 60: Haltestück
- 64: Haltesteg
- 64a: Haltehaken
- 66: umlaufende Nut
- 68: Grundkörper
- 72: (untere) Stützstege

- L: Längsrichtung
- P1,P2: Pfeile
- R: radiale Richtung

## Patentansprüche

1. Verfahren zur Demontage von Blasformen aus einer Umformeinrichtung zum Umformen von Kunststoffvorformlingen zu Kunststoffbehältnissen, wobei diese Umformeinrichtung (2) wenigstens einen Blasformträger (4) und eine an diesem Blasfomsträger (4) angeordnete mehrteilige Blasform (6) aufweist,
**dadurch gekennzeichnet, dass**
die Blasform (6) zwei Seitenteite (12. 14) aufweist und in einem wenigstens teisweise zusammengesetzten Zustand, in dem wenigstens zwei Bestandteile der Blasform (6) im Wesentlichen zusammengesetzt sind von dem Blasformträger (4) getrennt wird, wobei in einem ersten Verfahrenschritt die Blasform (6) von dem Blasformträger (4) getrennt wird und anschließend die Blasform in wenigstens teilweise zusammengesetztern Zustand von der Umformeinrichtung entfernt wird, deran, dass die Seitenteile (12, 14) der Blasform in wenigstens teilweise zusammengesetztem Zustand von der Umformeinrichtung entfernt werden.

2. Verfahren nach Anspruch 1
**dadurch gekennzeichnet dass**
die Blasform ein Badenteil (16) aufweist und dieses Bodenteil (16) bevorzugt an wenigstens einer Blasformhälfte (12, 14) befestigt ist, während die Blasform (6) von dem Blasformtäger (4) getrennt wird.

3. Verfahren nach Anspruch 1,
**dadurch gekennzeichnet, dass**
die Seitenteile (12, 14) derart an dem Bodenteil (16) arretiert werden, dass sich der Formträger beim Öffnen von den Blasformhälften löst.

4. Verfahren nach wenigstens einem der vorangegangenen Ansprüche,
**dadurch gekennzeichnet, dass**
die Blasform (6) nach der Trennung von dem Blasformträger (4) mittels einer Transporteinrichtung transportiert wird.

5. Verfahren nach wenigstens einem der vorangegangenen Ansprüche,
**dadurch gekennzeichnet, dass**
die Blasform (6) an einem Halteelement (28) transportiert wird, weiches auch zum Transport der Behältnisse dient.

6. Umformeinrichtung (1) zum Umformen von Kunststoffvorformlingen zu Kunststoffbehältnissen mit einer mehrteilig ausgebildeten Blasform (6), welche einen Hohlraum ausbildet, innerhalb dessen die Kunststoffvorformlinge zu Kunststoftbehaltnissen expandierbar sind, wobei die Umformeinrichtung (1) einen Blasformträger (4) aufweist, an dem die Blasform (6) lösbar angeordnet ist.
**dadurch gekennzeichnet, dass**
ein Haltemittel vorgesehen ist, welches wenigstens zwei Seitenteile (12, 14) der Blasform (6) in einem von dem Blasformträger (4) gelösten Zustand aneinander befestigt.

7. Umformeinrichtung (1) nach Anspruch 6,
**dadurch gekennzeichnet, dass**
der Blasformträger (4) über einen automatisch lösbaren Verbindungsmechanismus (25) mit der Blasform (6) in Verbindung steht.

8. Umformeinrichtung (1) nach wenigstens einem der vorangegangenen Ansprüche,
**dadurch gekennzeichnet, dass**
die zwei Seitenteile (12, 14) der Blasform unmittelbar aneinander mlt dem Haltemittel befestigt sind.

9. Umformungseinrichtung (1) nach wenigstens einem der vorangegangenen Ansprüche,
**dadurch gekennzeichnet, dass**
die Blasform (6) an einem Halteelement (28) befestigbar ist, welches in einem Arbeitsbetrieb zum Transportieren der Behältnisse dient.

10. Umformeinrichtung (1) nach wenigstens einem der vorangegangenen Ansprüche,
**dadurch gekennzeichnet, dass**
ein Haltestück vorgesehen ist, welches sowohl mit der Blasform (6) als auch mit einem Halteelement (22) welches in einem Arbeitsbetrieb zum Transportieren der Behältnisse dient, in Verbindung bringbar ist.

11. Umformungseinrichtung (1) nach Anspruch 12,
**dadurch gekennzeichnet, dass**
das Haltestück mit zwei Teilen (12, 14) der Blasform (6) zum Halten der Blasform in Eingriff bringbar ist.

12. Blasform (6) zum Umformen von Kunststoffvorformingen zu Kunststoffbehältnissen mit einem ersten Seitenteil (12) und einem zweiten Seitenteil (14), wobei das erste Seitenteil (12) und das zweite Seitenteil (14) in einem zusammengesetzten Zustand einen Hohlraum umgeben, innerhalb dessen die Kunststoffvorformlinge zu Kunststoffbehältnissen expandierbar sind,
**dadurch gekennzeichnet, dass**
die Blasform eine Verbindungseinrichtung (30) aufweist, welche das erste Seitenteil (12) an dem zweiten Seitenteil (14) befestigt, wobei ein Element (31) dieser Verbindungseinrichtung mit dem ersten Seitenteil (12) in Verbindung steht und ein weiteres Element (32) dieser Verbindungseinrichtung mit dem zweiten Seitenteil in Verbindung steht, so dass die Blasform (6) in einem geschlossenen Zustand transportabel ist.

## Claims

1. Method for removal of blow moulds from a moulding device for transforming plastic preforms into plastic containers, wherein this moulding device (2) comprises at least one blow mould carrier (4) and a multipiece blow mould (6) arranged on this blow mould carrier (4), **characterised in that** the blow mould (6) comprises two side parts (12, 14) and is separated from the blow mould carrier (4) in an at least partly assembled state, in which at least two parts of the blow mould (6) are essentially assembled, wherein in a first item of the method the blow mould (6) is separated from the blow mould carrier (4) and subsequently the blow mould is separated from the moulding device in an at least partly assembled state, such that the side parts (12, 14) of the blow mould are removed from the moulding device in an at least partly assembled state.

2. Method according to claim 1, **characterised in that** the blow mould has a base part (16) and this base part (16) is preferably attached to at least one of the side parts (12, 14) while the blow mould (6) is separated from the blow mould carrier (4).

3. Method according to claim 1, **characterised in that** the side parts (12, 14) are locked to the base part (16) such that the mould carrier detaches from the blow mould halves on opening.

4. Method according to at least one of the preceding claims, **characterised in that** the blow mould (6) after separation from the blow mould carrier (4) is transported by means of a transport device.

5. Method according to at least one of the preceding claims, **characterised in that** the blow mould (6) is transported on a holdeing element (28) which also serves to transport the containers.

6. Forming device (1) for transforming plastic preforms into plastic containers with a multipiece blow mould (6) that forms a cavity within which the plastic preforms can be expanded into plastic containers, wherein the forming device (1) comprises a blow mould carrier (4) on which the blow mould (6) is releasably arranged, **characterised in that** a holding means is provided which attaches at least two side parts (12, 14) of the blow mould (6) together in a state detached from the blow mould carrier (4).

7. Forming device (1) according to claim 6, **characterised in that** the blow mould carrier (4) is connected with the blow mould (6) via an automatically releasable connecting mechanism (25).

8. Forming device (1) according to at least one of the preceding claims, **characterised in that** the two side parts (12, 14) of the blow mould are attached together directly with the holding means.

9. Forming device (1) according to at least one of the preceding claims, **characterised in that** the blow mould (6) can be attached to a holding element (28) which in a working mode serves to transport the containers.

10. Forming device (1) according to at least one of the preceding claims, **characterised in that** a holding piece is provided which can be brought into connection both with the blow mould (6) and with a holding element (22) which in working mode serves to transport the containers.

11. Forming device (1) according to claim 12, **characterised in that** the holding piece can be brought into engagement with two parts (12, 14) of the blow mould (6) to hold the blow mould.

12. Blow mould (6) for transforming plastic preforms into plastic containers with a first side part (12) and a second side part (14), wherein the first side part (12) and the second side part (14) in an assembled state surround a cavity within which the plastic preforms can be expanded into plastic containers, **characterised in that** the blow mould comprises a connecting device (30) which attaches the first side part (12) to the second side part (14), wherein an element (31) of this connecting device is connected with the first side part (12) and a further element (32) of this connecting device is connected with the second side part so that blow mould (6) can be transported in a closed state.

## Revendications

1. Procédé de démontage de moules de soufflage d'un dispositif de mise en forme destiné à mettre en forme des préformes en matière plastique pour obtenir des contenants en matière plastique, ce dispositif de mise en forme (2) comprenant au moins un support de moule de soufflage (4) et un moule de soufflage (6) en plusieurs parties agencé sur ce support de moule de soufflage (4),
**caractérisé en ce que**
le moule de soufflage (6) comprend deux parties latérales (12, 14) et, dans un état au moins en partie assemblé, dans lequel au moins deux composants du moule de soufflage (6) sont sensiblement assemblés, est séparé du support de moule de soufflage (4), le moule de soufflage (6) étant séparé du support de moule de soufflage (4) au cours d'une première étape de procédé puis le moule de soufflage, dans l'état au moins en partie assemblé, étant retiré du dispositif de mise en forme, de telle sorte que les parties latérales (12, 14) du moule de soufflage, lorsqu'elles se situent dans l'état au moins en partie assemblé, sont retirées du dispositif de mise en forme.

2. Procédé selon la revendication 1,
**caractérisé en ce que**
le moule de soufflage comprend une partie inférieure (16) et cette partie inférieure (16) est fixée de préférence sur au moins une moitié des parties laterales (12, 14), tandis que le moule de soufflage (6) est séparé du support de moule de soufflage (4).

3. Procédé selon la revendication 1, **caractérisé en ce que**
les parties latérales (12, 14) sont bloquées sur la partie inférieure (16), de telle sorte que le support de moule se détache des moitiés de moule de soufflage à l'ouverture.

4. Procédé selon au moins une des revendications précédentes, **caractérisé en ce que**
le moule de soufflage (6), une fois séparé du support de moule de soufflage (4), est transporté au moyen d'un dispositif de transport.

5. Procédé selon au moins une des revendications précédentes, **caractérisé en ce que**
le moule de soufflage (6) est transporté sur un élément de retenue (28), lequel sert également au transport des contenants.

6. Dispositif de mise en forme (1) destiné à mettre en forme des préformes en matière plastique pour obtenir des contenants en matière plastique au moyen d'un moule de soufflage (6) comportant plusieurs parties, lequel forme une cavité à l'intérieur de laquelle les préformes en matière plastique peuvent être expansées pour obtenir des contenants en matière plastique, le dispositif de mise en forme (1) comprenant un support de moule de soufflage (4) sur lequel le moule de soufflage (6) est monté détachable,
**caractérisé en ce que**
un moyen de retenue fixe au moins deux parties latérales (12, 14) du moule de soufflage (6) l'une contre l'autre lorsque ledit moule se trouve dans un état détaché du support de moule de soufflage (4).

7. Dispositif de mise en forme (1) selon la revendication 6, **caractérisé en ce que**
le support de moule de soufflage (4) est relié au moule de soufflage (6) par l'intermédiaire d'un mécanisme de liaison (25) pouvant être détaché automatiquement.

8. Dispositif de mise en forme (1) selon au moins une des revendications précédentes, **caractérisé en ce que**
les deux parties latérales (12, 14) du moule de soufflage sont fixées directement les unes contre les autres à l'aide du moyen de retenue.

9. Dispositif de mise en forme (1) selon au moins une quelconque des revendications précédentes, **caractérisé en ce que**
le moule de soufflage (6) peut être fixé contre un élément de retenue (28), lequel sert, en mode opératoire, à transporter les contenants.

10. Dispositif de mise en forme (1) selon au moins une des revendications précédentes, **caractérisé en ce qu'**
une pièce de retenue peut être amenée en liaison à la fois avec le moule de soufflage (6) et avec un élément de retenue (22), lequel, en mode opératoire, sert à transporter les contenants.

11. Dispositif de mise en forme (1) selon la revendication 10, **caractérisé en ce que**
la pièce de retenue peut être amenée en contact avec deux parties (12, 14) du moule de soufflage (6) pour retenir le moule de soufflage.

12. Moule de soufflage (6) destiné à mettre en forme des préformes en matière plastique pour obtenir des contenants en matière plastique, comprenant une première partie latérale (12) et une seconde partie latérale (14), la première partie latérale (12) et la seconde partie latérale (14) étant entourées, lorsqu'elles se situent dans un état assemblé, par une cavité à l'intérieur de laquelle les préformes en matière plastique peuvent être expansées pour obtenir des contenants en matière plastique,
**caractérisé en ce que**
le moule de soufflage comprend un dispositif de liaison (30), lequel fixe la première partie latérale (12) à la seconde partie latérale (14), un élément (31) de ce dispositif de liaison étant relié à la première partie latérale (12) et un autre élément (32) de ce dispositif de liaison étant relié à la seconde partie latérale, de sorte que le moule de soufflage (6) peut être transporté dans un état fermé.
